# EUROPÄISCHE PATENTANMELDUNG

(11) **EP 1 126 349 A2**
(43) Veröffentlichungstag der Anmeldung: **22.08.2001**
(21) Anmeldenummer: 00127561.9
(22) Anmeldetag: 15.12.2000
(51) Int. Cl.: G05D 16/10

(54) **Druckreduzierventil**

(30) Priorität: 17.02.2000 DE 10007291
(71) Anmelder: Nass Magnet GmbH, 30179 Hannover (DE)
(72) Erfinder: Hiddessen, Ralf, 31275 Lehrte-Arpke (DE); Wagner, Holger, 30459 Hannover (DE)
(74) Vertreter: Tetzner, Michael, Dipl.-Ing.

(57) **Zusammenfassung**

Die Erfindung betrifft ein Druckreduzierventil mit
- einem Ventilgehäuse (1), das einen Primärdruckanschluß und einen Sekundärdruckanschluß (1b) aufweist,
- einem im Ventilgehäuse zwischen dem Primärdruckanschluß und dem Sekundärdruckanschluß vorgesehenen ersten Verbindungskanal (2),
- einem im Ventilgehäuse zwischen einer Freigabe- und einer Schließstellung des ersten Verbindungskanals hin- und herbeweglichen Schieber (3),
- einem Betätigungselement (4), das mittels einer Feder den Schieber in die Öffnungsstellung drängt,
- zwischen Ventilgehäuse und Schieber vorgesehenen Dichtungen (6,7), wodurch an einem Endbereich des Schiebers ein erster Druckraum (8), im Mittelbereich (3b) des Schiebers ein zweiter Druckraum und am anderen Endbereich ein dritter Druckraum ausgebildet wird, wobei der erste und zweite Druckraum (8,9) in der Freigabestellung des Schiebers (3) über den ersten Verbindungskanal (2) miteinander in Verbindung stehen,
- einem im Schieber ausgebildeten, den ersten und dritten Druckraum (8,10) miteinander verbindenden zweiten Verbindungskanal (11),
- einem im Bereich des Betätigungselements (4) vorgesehenen vierten Druckraum (12), der über einen im Ventilgehäuse vorgesehenen dritten Verbindungskanal (13) mit dem Sekundärdruckanschluß in Wirkverbindung steht, wobei der im vierten Druckraum herrschende Sekundärdruck entgegen der Kraft der Feder (5) auf das Betätigungselement wirkt.

Der zweite Druckraum (9) im Mittelbereich (3b) des Schiebers ist über den Primärdruckanschluß (1a) dem Primärdruck ausgesetzt, während der erste und dritte Druckraum (8,10) an den Endbereichen des Schiebers über den Sekundärdruckanschluß dem Sekundärdruck ausgesetzt sind. Der dritte und vierte Druckraum (10,12) sind über den dritten Verbindungskanal (13) miteinander verbunden.

## Beschreibung

Die Erfindung betrifft ein Druckreduzierventil gemäß dem Oberbegriff des Anspruches 1.

Derartige Druckreduzierventile stellen an ihren Sekundärdruckanschlüssen einen meist einstellbaren Sekundär- bzw. Arbeitsdruck zur Verfügung, der von angeschlossenen Druckluftverbrauchern benutzt werden kann. Das Druckreduzierventil stellt unabhängig von Schwankungen beim Primärdruck bzw. beim Verbrauch an Druckluft durch den Druckluftverbraucher einen konstanten Arbeitsdruck bereit.

Aus der DE-U-296 18 080 ist ein Druckregler bekannt, bestehend aus einem Primärkanal, der im Betrieb unter einem Primärdruck stehendes Druckmedium führt, einem Sekundärkanal, der zur Führung eines unter einem Sekundärdruck stehenden Druckmediums vorgesehen ist, einem in die Verbindung zwischen dem Primärkanal und dem Sekundärkanal eingeschalteten Regelventil, das ein zur Beeinflussung des dem Druckmedium zur Verfügung stehenden Durchströmquerschnittes dienendes Ventilglied aufweist sowie einer mit dem Sekundärdruck beaufschlagbaren Regelkammer, die von einer bewegbaren Wand begrenzt ist, die auf ihrer der Regelkammer abgewandten Außenseite von einer Stellfeder beaufschlagt ist und auf ihrer der Regelkammer zugewandten Innenseite mit dem Ventilglied zusammenwirkt. Der Primärkanal, der Sekundärkanal und die getrennt von dem Sekundärkanal ausgebildete Regelkammer des Druckreglers sind an eine elektrisch betätigbare Steuerventileinrichtung angeschlossen, die zwischen einer Arbeitsstellung, in der sie zwischen der Regelkammer und dem Sekundärkanal eine Verbindung herstellt, und einer Absperrstellung, in der sie eine Verbindung zwischen der Regelkammer und dem Primärkanal herstellt, umschaltbar ist.

Der bekannte Druckregler ist vom Aufbau sehr aufwendig und benötigt zudem eine externe, elektrisch betätigbare Steuerventileinrichtung.

Ein baulich wesentlich kompakteres Druckreduzierventil, das zudem als Funktionsverschraubung ausgebildet werden kann, ist aus der EP-B-0 086 902 bekannt. Es weist folgende Bestandteile auf:
- ein Ventilgehäuse, das einen Primärdruckanschluß und einen Sekundärdruckanschluß aufweist,
- einen im Ventilgehäuse zwischen dem Primärdruckanschluß und dem Sekundärdruckanschluß vorgesehenen ersten Verbindungskanal,
- einen im Ventilgehäuse zwischen einer Freigabe- und einer Schließstellung des Ventilkanals hin- und herbeweglichen Schieber,
- ein Betätigungselement, das mittels einer Feder den Schieber in die Öffnungsstellung drängt,
- zwischen Ventilgehäuse und Schieber vorgesehenen Dichtungen, wodurch an einem Endbereich des Schiebers ein erster Druckraum, im Mittelbereich des Schiebers ein zweiter Druckraum und am anderen Endbereich ein dritter Druckraum ausgebildet wird, wobei der erste und zweite Druckraum in der Freigabestellung des Schiebers über den ersten Verbindungskanal miteinander in Verbindung stehen,
- einen im Schieber ausgebildeten, den ersten und dritten Druckraum miteinander verbindenden zweiten Verbindungskanal,
- sowie einen im Bereich des Betätigungselements vorgesehenen vierten Druckraum, der über ein im Ventilgehäuse vorgesehenen dritten Verbindungskanal mit dem Sekundärdruckanschluß in Wirkverbindung steht, wobei der im vierten Druckraum herrschende Sekundärdruck entgegen der Kraft der Feder auf das Betätigungselement wirkt.

Dieses bekannte Druckreduzierventil weist eine Primärdruckentlastung auf, wodurch die den Schieber in die Öffnungsstellung drängende Feder entsprechend kleiner und kompakter ausgebildet werden kann.

Ausgehend von diesem Stand der Technik liegt der Erfindung die Aufgabe zugrunde, ein Druckreduzierventil gemäß dem Oberbegriff des Anspruches 1 mit Sekundärdruckentlastung anzugeben, das sich durch einen einfachen und kompakten Aufbau auszeichnet.

Erfindungsgemäß wird diese Aufgabe durch die Merkmale des Anspruches 1 gelöst.

Weitere Ausgestaltungen der Erfindung sind Gegenstand der Unteransprüche.

Beim erfindungsgemäßen Druckreduzierventil ist der zweite Druckraum im Mittelbereich des Schiebers über den Primärdruckanschluß dem Primärdruck ausgesetzt. Der erste und dritte Druckraum an den Endbereichen des Schiebers sind hingegen über den Sekundärdruckanschluß dem Sekundärdruck ausgesetzt. Ferner stehen der dritte und vierte Druckraum über den dritten Verbindungskanal miteinander in Verbindung.

In einem bevorzugten Ausführungsbeispiel ist ferner eine zweite Feder vorgesehen, die den Schieber in Richtung auf das Betätigungselement drängt. Ferner wirkt die zwischen erstem und zweitem Druckraum vorgesehene Dichtung mit einem Ventilsitz zusammen.

In einem speziellen Ausführungsbeispiel ist in dem vierten Druckraum eine Entlüftungsöffnung vorgesehen, die im Kontaktbereich zwischen Betätigungselement und Schieber angeordnet ist.

Zur Einstellung des Einstelldrucks ist in einem bevorzugten Ausführungsbeispiel eine Verstelleinrichtung zur Einstellung der Vorspannung der ersten Feder vorgesehen, wobei der Schieber von der Freigabestellung in die Schließstellung bewegt wird, wenn der in dem vierten Druckraum herrschende Sekundärdruck den Einstelldruck übersteigt.

Die erfindungsgemäße Ausgestaltung benötigt zudem lediglich drei Dichtungen, die zwischen dem ersten und zweiten Druckraum, zwischen dem zweiten und dritten Druckraum und zur Abdichtung des vierten Druckraumes vorgesehen sind. Die zur Abdichtung des vierten Druckraumes vorgesehene dritte Dichtung kann beispielsweise als Formdichtung ausgebildet werden.

Das erfindungsgemäße Druckreduzierventil kann zudem als Funktionsverschraubung ausgebildet werden.

Weitere Vorteile und Ausgestaltungen der Erfindung werden anhand der folgenden Beschreibung eines Ausführungsbeispieles und der Zeichnung näher erläutert.

In der Zeichnung zeigen
- Fig. 1: eine Schnittdarstellung des Druckreduzierventils in einem ersten Betriebszustand,
- Fig.2: eine Schnittdarstellung des Druckreduzierventils in einem zweiten Betriebszustand,
- Fig.3: eine Schnittdarstellung des Druckreduzierventils in einem dritten Betriebszustand und
- Fig.4: eine schematische Darstellung eines Anwendungsfalles des Druckreduzierventils.

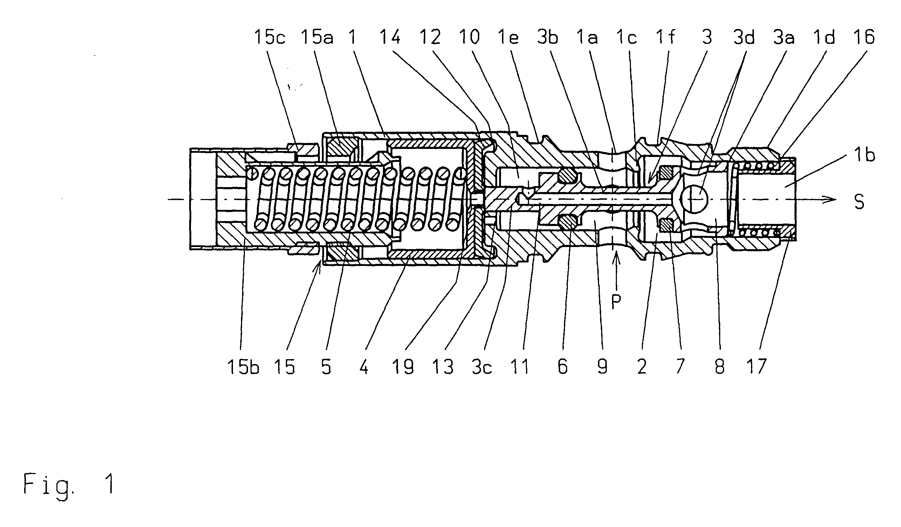

Im folgenden wird zunächst der prinzipielle Aufbau des in den Figuren 1 bis 3 gezeigten Druckreduzierventils näher erläutert.

Das Druckreduzierventil weist ein als Hohlschraube ausgebildetes Ventilgehäuse 1 auf, das einen Primärdruckanschluß la und einen Sekundärdruckanschluß 1b vorsieht. Im Ventilgehäuse 1 ist zwischen dem Primärdruckanschluß la und dem Sekundärdruckanschluß 1b ein erster Verbindungskanal 2 angeordnet. Ferner ist ein im Ventilgehäuse zwischen einer Freigabe- und einer Schließstellung des Ventilkanals 2 hin- und herbeweglicher Schieber 3 vorgesehen. Der Schieber 3 wird durch ein Betätigungselement 4 mittels einer Feder 5 in die in der Fig.1 gezeigten Öffnungsstellung gedrängt.

Zwischen Ventilgehäuse 1 und Schieber 3 sind Dichtungen 6, 7 vorgesehen, wodurch an einem Endbereich 3a des Schiebers 3 ein erster Druckraum 8, im Mittelbereich 3b des Schiebers 3 ein zweiter Druckraum 9 und am anderen Endbereich 3c ein dritter Druckraum 10 ausgebildet wird, wobei der erste und zweite Druckraum 8, 9 in der Freigabestellung des Schiebers gemäß Fig.1 über den ersten Verbindungskanal 2 miteinander in Verbindung stehen.

Im Schieber 3 ist ferner ein den ersten und dritten Druckraum 8, 10 miteinander verbindender zweiter Verbindungskanal 11 ausgebildet.

Im Bereich des Betätigungselementes 4 ist schließlich ein vierter Druckraum 12 vorgesehen, der über ein im Ventilgehäuse 1 vorgesehenen dritten Verbindungskanal 13 mit dem Sekundärdruckanschluß 1b in Wirkverbindung steht, wobei der im vierten Druckraum 12 herrschende Sekundärdruck entgegen der Kraft der Feder 5 auf das Betätigungselement 4 wirkt.

Der zweite Druckraum 9 ist im Mittelbereich des Schiebers zwischen Schieber 3 und Ventilgehäuse 1 ausgebildet und ist über den Primärdruckanschluß la dem Primärdruck P ausgesetzt. Der erste und dritte Druckraum 8, 10 an den Endbereichen des Schiebers 3 werden ebenfalls durch den Schieber 3 und das Ventilgehäuse 1 begrenzt. Diese beiden Druckräume 8, 10 sind über den Sekundärdruckanschluß dem Sekundärdruck S ausgesetzt. Der dritte und vierte Druckraum 10, 12 sind über den dritten Verbindungskanal 13 miteinander verbunden.

Die Dichtung 6 ist als O-Ring ausgebildet, in einer entsprechenden Umfangsnut am Schieber 3 angeordnet und wirkt mit dem Ventilgehäuse 1 zusammen. Dadurch sind der zweite und dritte Druckraum 9, 10 voneinander abgedichtet.

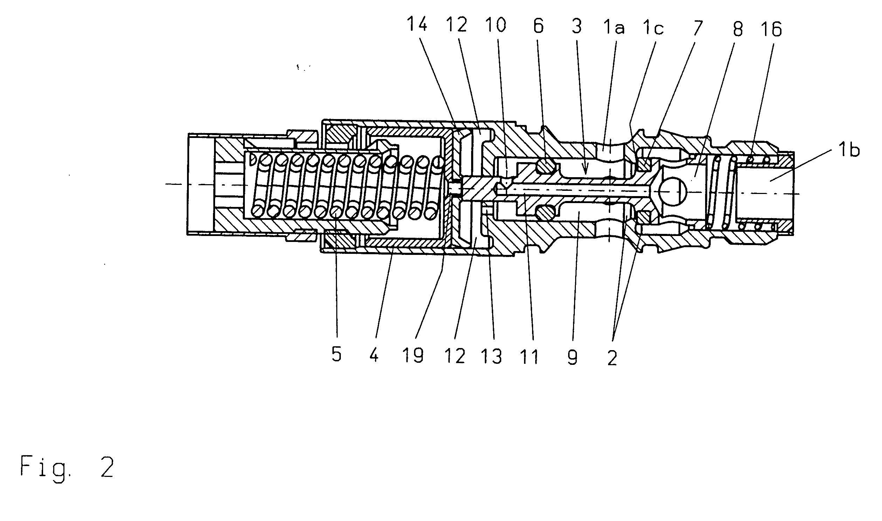

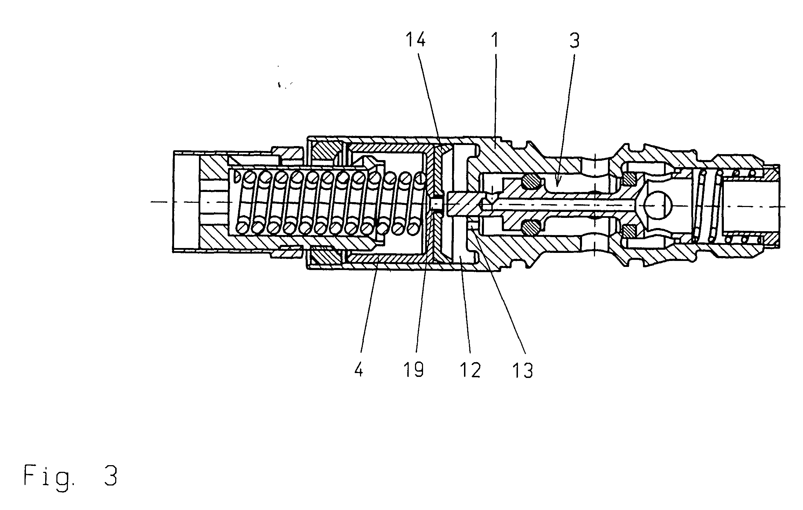

Zwischen dem ersten und zweiten Druckraum 8, 9 ist die Dichtung 7 vorgesehen, die als Vierkantdichtung ausgebildet und in einer entsprechenden Umfangsnut des Schiebers 3 angeordnet ist. Diese Dichtung 7 wirkt mit einem an der Innenwandung des Ventilgehäuses 1 ausgebildeten Ventilsitz lc zusammen. Liegt die Dichtung 7 am Ventilsitz lc an, wie in den Figuren 2 und 3, ist der erste Verbindungskanal 2 geschlossen. Befindet sich der Schieber 3 in der in Fig.1 gezeigten Stellung, ist die Dichtung 7 vom Ventilsitz lc abgehoben und der erste Verbindungskanal 2 freigegeben. In der in Fig.1 gezeigten Freigabestellung kann ein Druckmedium vom Primärdruckanschluß la über den ersten Verbindungskanal 2 und Bohrungen 3d im Endbereich 3a des Schiebers zum Sekundäranschluß 1b gelangen.

Das Betätigungselement 4 ist als Kolben ausgebildet und drückt mittels der Kraft der Feder 5 gegen den Endbereich 3c des Schiebers 3. Das Betätigungselement 4 und das Ventilgehäuse 1 begrenzen den vierten Druckraum 12, der mittels einer als Formdichtung ausgebildeten dritten Dichtung 14 gegenüber dem Umgebungsdruck abgedichtet ist.

Der Druck, mit dem das Betätigungselement 4 auf den Schieber 3 einwirkt, läßt sich mit Hilfe einer Verstelleinrichtung 15 einstellen. Die Verstelleinrichtung 15 weist eine fest im Ventilgehäuse 1 angeordnete Stellmutter 15a, eine Stellschraube 15b sowie eine Sicherungsmutter 15c auf. Die Feder 5 ist zwischen dem Betätigungselement 4 und der Stellmutter 15b angeordnet. Durch Verdrehen der Stellmutter 15b läßt sich die Länge des für die Feder 5 zur Verfügung stehenden Raumes verändern, wodurch eine bestimmte Vorspannung der Feder 5 eingestellt werden kann. Die axiale Verstellung erfolgt, indem die Stellschraube 15b gegenüber der Stellmutter 15a verdreht wird. Mit Hilfe der Sicherungsmutter 15c kann die Lage der Stellschraube gesichert werden.

Am gegenüberliegenden Endbereich 3a des Schiebers wirkt der Schieber 3 mit einer zweiten Feder 16 zusammen, die sich mit einem Ende am Schieber 3 und mit dem anderen Ende im dargestellten Ausführungsbeispiel an einem Eindrückring 17 abstützt.

Das in der Zeichnung dargestellte Druckreduzierventil ist als Funktionsverschraubung ausgebildet. Das Ventilgehäuse 1 weist zu diesem Zweck im Bereich des Sekundärdruckanschlusses 1b ein Außengewinde ld auf, mit dem das Ventil in einen Druckluftverbraucher oder eine Versorgungsleitung eingeschraubt werden kann.

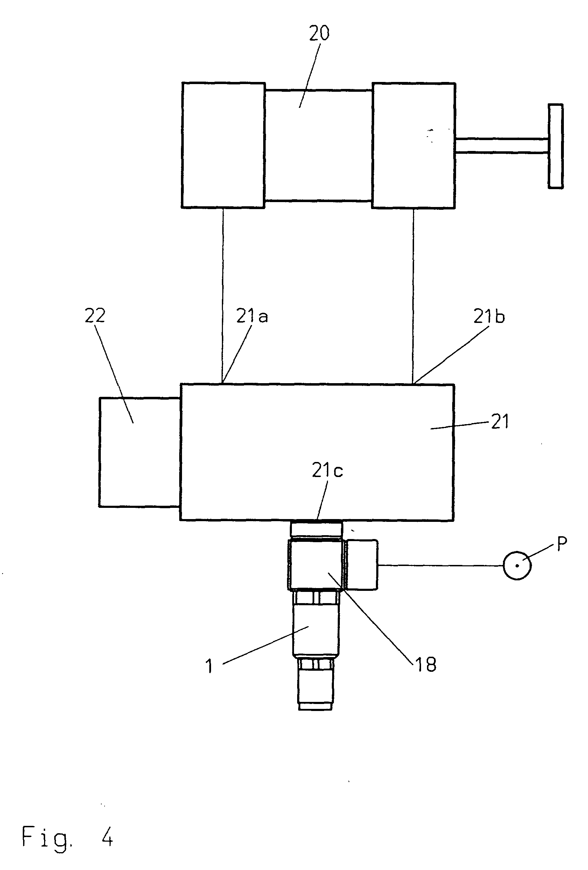

Im Bereich des Primärdruckanschlusses la ist bei einer Funktionsverschraubung üblicherweise ein sogenannter Ringstutzen vorgesehen, der in der Figur 4 mit dem Bezugszeichen 18 schematisch dargestellt ist. Zwischen Ringstutzen 18 und Ventilgehäuse 1 sind Ringdichtungen vorgesehen, die beispielsweise in den in den Figuren 1 bis 3 angedeuteten Ringnuten le, 1f angeordnet werden.

Die Funktion des Druckreduzierventils sowie weitere Ausgestaltungen werden im folgenden näher erläutert:

Durch die Einstellung der Vorspannung der Feder 5 mit Hilfe der Verstelleinrichtung 15 läßt sich ein sogenannter Einstelldruck festlegen, wobei der Schieber 3 von der Freigabestellung gemäß Fig.1 in die Schließstellung gemäß Fig.2 bewegt wird, wenn der in dem vierten Druckraum 12 herrschende Sekundärdruck S den Einstelldruck übersteigt.

In dem in Fig.1 gezeigten Betriebszustand ist der Sekundärdruck S somit noch kleiner als der durch die Vorspannung der Feder festgelegte Einstelldruck. Der über den Primärdruckanschluß la anliegende Druckmedium kann somit ungehindert über den ersten Verbindungskanal 2 und die Bohrungen 3d zum Sekundärdruckanschluß 1b gelangen. Der Sekundärdruck im Bereich des Sekundärdruckanschlusses wird somit in Abhängigkeit der angeschlossenen Druckluftverbraucher steigen.

Der Sekundärdruck S gelangt vom ersten Druckraum 8 im Bereich des Sekundärdruckanschlusses 1b über den zweiten Verbindungskanal 11 in den dritten Druckraum 10 und von dort über den dritten Verbindungskanal 13 in den vierten Druckraum 12. Im Druckraum 12 herrscht somit der Sekundärdruck, der sich in der in Fig.1 gezeigten Stellung in Abhängigkeit der angeschlossenen Druckluftverbraucher erhöht.

Die beiden Endbereiche 3a und 3c des Schiebers 3 sind derart ausgebildet, daß der durch den Sekundärdruck im ersten Druckraum 8 und dritten Druckraum 10 auf den Schieber 3 ausgeübte Druck im wesentlichen kompensiert wird. Außerdem ist der Schieber 3 in seinem Mittelbereich 3b ebenfalls so ausgebildet, daß der dort herrschende, auf den Schieber 3 wirkende Primärdruck kompensiert wird.

Die Bewegung des Schiebers 3 wird somit im wesentlichen durch die zweite Feder 16, die den Schieber in die Schließstellung drängt, und durch das Betätigungselement 4 bestimmt. Das Betätigungselement 4 drängt den Schieber mittels der Feder 5 in die Freigabestellung, in der die Dichtung 7 vom Ventilsitz lc abgehoben ist, während der im vierten Druckraum 12 herrschende Sekundärdruck der Feder entgegenwirkt.

Sobald der Sekundärdruck im vierten Druckraum 12 den Einstelldruck der Feder 5 übersteigt, bewegt sich das Betätigungselement 4 gemäß Fig.2 nach links. Der Schieber 3 führt aufgrund der zweiten Feder 16 ebenfalls eine Bewegung nach links aus, wobei der Schieber von der Freigabestellung in die in Fig.2 dargestellte Schließstellung gelangt. In der Schließstellung sitzt die Dichtung 7 auf dem Ventilsitz lc auf, wodurch der erste Verbindungskanal 2 verschlossen wird. In dieser Stellung kann das am Primärdruckanschluß la anliegende Druckmedium nicht mehr zum Sekundärdruckanschluß 1b gelangen.

Kommt es im Betriebszustand gemäß Fig.2 zu einer weiteren Erhöhung des Sekundärdrucks im vierten Druckraum 12, löst sich das Betätigungselement 4 zusammen mit der dritten Dichtung 14 vom Schieber 3.

In der in den Figuren 1 bis 3 gezeigten Ausführungsvariante des Druckreduzierventils ist in dem vierten Druckraum 12 im Kontaktbereich zwischen Betätigungselement 4 und Schieber 3 eine Entlüftungsöffnung 19 vorgesehen. Die als Formdichtung ausgebildete dritte Dichtung 14 dichtet somit zwei Dichtstellen ab, nämlich zum einen den Bereich zwischen Betätigungselement 4 und Innenwandung des Ventilgehäuses 1 und zum anderen den Bereich zwischen Schieber 3 und Entlüftungsöffnung 19.

Im Betriebszustand gemäß Fig.3 ist die Entlüftungsöffnung 19 freigegeben, so daß das Druckmedium in dem vierten Druckraum 12 über die Entlüftungsöffnung 19 entweichen kann. Mit zunehmender Reduzierung des Drucks in dem vierten Druckraum 12 wird sich die Entlüftungsöffnung durch axiale Bewegung des Betätigungselements 4 wieder schließen, so daß der Betriebszustand gemäß Fig.2 erreicht wird. Bei zunehmendem Verbrauch des Druckmediums durch die angeschlossenen Druckluftverbraucher wird sich zudem der Sekundärdruck weiter verringern, so daß der in dem vierten Druckraum 12 herrschende Sekundärdruck nicht mehr ausreicht, die Kraft der Feder 5 zu kompensieren, so daß das Ventil wieder in den Betriebszustand 1 gemäß Fig.1 übergeht.

Bei einem anderen erfindungsgemäßen Ausführungsbeispiel, das in der Zeichnung nicht näher dargestellt ist, kann die Entlüftungsöffnung 19 auch weggelassen werden. Der Unterschied zum dargestellten Ausführungsbeispiel besteht dann darin, daß ein zu hoher Sekundärdruck nicht sofort über eine Entlüftungsöffnung, sondern erst durch entsprechenden Verbrauch durch die angeschlossenen Druckluftverbraucher ausgeglichen werden kann.

Das erfindungsgemäße Druckreduzierventil zeichnet sich durch eine kompakte und kleine Bauweise aus, die sich insbesondere zur Integration in einer Funktionsverschraubung eignet.

Durch die spezielle Ausgestaltung des Ventilgehäuses 1 und des Schiebers 3 kommt es neben einer Primärdruckentlastung auch zu einer Sekundärdruckentlastung, d.h. die axialen Kräfte am Schieber, die sich aufgrund der Dichtungen 6 und 7 ergeben, werden durch geeignet ausgebildete Wirkflächen kompensiert.

Fig.4 zeigt ein Anwendungsbeispiel für das oben beschriebene Druckreduzierventil.

Bei der gezeigten Anwendung handelt es sich um einen Zylinder 20, der über ein Wegeventil 21 beim Vor- und Rückhub mit einem definierten Sekundärdruck beaufschlagt werden soll. Das Wegeventil wird über ein Magnetventil 22 gesteuert, um dadurch den Vorhub bzw. Rückhub des Zylinders 20 festzulegen.

Das Wegeventil 21 weist für den Vorhub einen ersten Ausgang 21a und für den Rückhub einen zweiten Ausgang 21b auf. Das Druckmedium zur Steuerung des Zylinders 20 wird über einen Eingang 21c zugeführt, wobei das Wegeventil 22 den Eingang 21c wahlweise mit dem ersten Ausgang 21a, zur Ausführung des Vorhubs, oder mit dem zweiten Ausgang 21b, zur Ausführung des Rückhubs, verbindet.

Damit der Zylinder 20 nicht mit dem hohen Primärdruck gesteuert werden muß, wird am Eingang des Wegeventils 21 das in den Figuren 1 bis 3 beschriebene Druckreduzierventil eingeschraubt. Das Außengewinde ld des Druckreduzierventils ist daher an das üblicherweise an Wegeventilen am Eingang vorgesehene Innengewinde angepaßt.

Mit der in Fig.4 gezeigten Anordnung läßt sich somit der Zylinder 20 mit einem am Druckreduzierventil einstellbaren Sekundärdruck steuern.

## Patentansprüche

1. Druckreduzierventil mit
- einem Ventilgehäuse (1), das einen Primärdruckanschluß (la) und einen Sekundärdruckanschluß (1b) aufweist,
- einem im Ventilgehäuse zwischen dem Primärdruckanschluß und dem Sekundärdruckanschluß vorgesehenen ersten Verbindungskanal (2),
- einem im Ventilgehäuse zwischen einer Freigabe- und einer Schließstellung des ersten Verbindungskanals hin- und herbeweglichen Schieber (3),
- einem Betätigungselement (4), das mittels einer Feder (5) den Schieber in die Öffnungsstellung drängt,
- zwischen Ventilgehäuse und Schieber vorgesehenen Dichtungen (6, 7), wodurch an einem Endbereich (3a) des Schiebers ein erster Druckraum (8), im Mittelbereich (3b) des Schiebers ein zweiter Druckraum (9) und am anderen Endbereich (3c) ein dritter Druckraum (10) ausgebildet wird, wobei der erste und zweite Druckraum (8, 9) in der Freigabestellung des Schiebers (3) über den ersten Verbindungskanal (2) miteinander in Verbindung stehen,
- einem im Schieber (3) ausgebildeten, den ersten und dritten Druckraum (8, 10) miteinander verbindenden zweiten Verbindungskanal (11),
- einem im Bereich des Betätigungselements (4) vorgesehene vierten Druckraum (12), der über einen im Ventilgehäuse (1) vorgesehenen dritten Verbindungskanal (13) mit dem Sekundärdruckanschluß (16) in Wirkverbindung steht, wobei der im vierten Druckraum (12) herrschende Sekundärdruck entgegen der Kraft der Feder (5) auf das Betätigungselement (4) wirkt,
dadurch gekennzeichnet, daß
- der zweite Druckraum (9) im Mittelbereich (36) des Schiebers über den Primärdruckanschluß (1a) dem Primärdruck (P) ausgesetzt ist,
- der erste und dritte Druckraum (8, 10) an den Endbereichen (3a, 3c) des Schiebers über den Sekundärdruckanschluß (1b) dem Sekundärdruck (S) ausgesetzt sind und
- der dritte und vierte Druckraum (10, 12) über den dritten Verbindungskanal (13) miteinander verbunden sind.

2. Druckreduzierventil nach Anspruch 1, dadurch gekennzeichnet, daß eine zweite Feder (16) vorgesehen ist, die den Schieber (3) in Richtung auf das Betätigungselement (4) drängt.

3. Druckreduzierventil nach Anspruch 1 und/oder 2, dadurch gekennzeichnet, daß die zwischen erstem und zweitem Druckraum (8, 9) vorgesehene Dichtung (7) mit einem Ventilsitz (1c) zusammenwirkt.

4. Druckreduzierventil nach einem oder mehreren der vorangegangenen Ansprüche, dadurch gekennzeichnet, daß im vierten Druckraum (12) eine Entlüftungsöffnung (19) vorgesehen ist, die im Kontaktbereich zwischen Betätigungselement (4) und Schieber (3) vorgesehen ist.

5. Druckreduzierventil nach einem oder mehreren der vorangegangenen Ansprüche, dadurch gekennzeichnet, daß eine Verstelleinrichtung (15) zur Einstellung der Vorspannung der ersten Feder (5) vorgesehen ist, wodurch ein Einstelldruck festgelegt wird, wobei der Schieber (3) von der Freigabestellung in die Schließstellung bewegt wird, wenn der im vierten Druckraum (12) herrschende Sekundärdruck den Einstelldruck übersteigt.

6. Druckreduzierventil nach einem oder mehreren der vorangegangenen Ansprüche, dadurch gekennzeichnet, daß zwischen dem ersten und zweiten Druckraum (8, 9) eine erste Dichtung (7), zwischen dem zweiten und dritten Druckraum (9, 10) eine zweite Dichtung (6) und zur Abdichtung des vierten Druckraums (12) eine dritte Dichtung (14) vorgesehen ist.

7. Druckreduzierventil nach Anspruch 6, dadurch gekennzeichnet, daß die dritte Dichtung (14) als Formdichtung ausgebildet ist.

8. Druckreduzierventil nach einem oder mehreren der vorangegangenen Ansprüche, dadurch gekennzeichnet, daß das Druckreduzierventil als Funktionsverschraubung ausgebildet ist.

9. Druckreduzierventil nach einem oder mehreren der. vorangegangenen Ansprüche, dadurch gekennzeichnet, daß der vierte Druckraum (12) eine Entlüftungsöffnung (19) aufweist, die im Kontaktbereich zwischen Betätigungselement (4) und Schieber (3) vorgesehen ist und die dritte Dichtung (14) als Formdichtung ausgebildet ist, wobei die Formdichtung sowohl eine erste Dichtstelle zwischen Betätigungselement und Ventilgehäuse als auch eine zweite Dichtstelle zwischen Schieber (3) und Entlüftungsöffnung (19) abdichtet.
